# EUROPÄISCHE PATENTSCHRIFT

(11) **EP 1 750 977 B1**
(45) Veröffentlichungstag und Bekanntmachung des Hinweises auf die Patenterteilung: **11.03.2009**
(21) Anmeldenummer: 05748284.6
(22) Anmeldetag: 21.05.2005
(51) Int. Cl.: B60R 21/16

(54) **KRAFTFAHRZEUG MIT EINEM KNIEGASSACK**
MOTOR VEHICLE WITH KNEE AIRBAG
VEHICULE AUTOMOBILE EQUIPE D'UN AIRBAG DE GENOUX

(30) Priorität: 28.05.2004 DE 102004026202
(43) Veröffentlichungstag der Anmeldung: 14.02.2007
(73) Patentinhaber: AUTOLIV DEVELOPMENT AB, 447 83 Vargarda (SE)
(72) Erfinder: NARIN, Muhammed, Ali, 81539 München (DE); GRUBER, Arno, 85375 Neufahrn (DE)
(74) Vertreter: Schön, Thilo
(86) Internationale Anmeldenummer: PCT/EP2005/005533
(87) Internationale Veröffentlichungsnummer: WO 2005/115807

(56) Entgegenhaltungen:
- DE-A1- 10 332 594
- GB-A- 2 340 458
- US-A- 5 324 070

## Beschreibung

### Technisches Gebiet der Erfindung

Die Erfindung betrifft ein Kraftfahrzeug mit wenigstens einem Kniegassack nach dem Oberbegriff des Anspruchs 1.

Der Einsatz von Kniegassäcken in Kraftfahrzeugen ist bekannt. Solche Kniegassäcke dienen gemeinsam mit einem Fahrer- oder Beifahrerairbag und einem Gurtsystem dem Schutz des Insassen bei einem Frontalzusammenstoß oder bei einem seitlich versetzten Frontalzusammenstoß. Hierbei kommen dem Kniegassack im wesentlichen zwei Aufgaben zu: Zum einen soll er verhindern, dass der Knie-Schienbeinbereich des Insassen auf die Innenstruktur des Fahrzeugs prallt. Weiterhin hat ein Kniegassack die Aufgabe, den Insassen bei einem Frontalzusammenstoß in seiner Sitzposition zu halten. Diese Aufgabe teilt er sich im Normalfall mit dem Gurtsystem; der Kniegassack sollte idealerweise jedoch so ausgelegt sein, dass er ein in Position halten des Insassen auch dann - zumindest in eingeschränktem Umfang - bewirkt, wenn der Sicherheitsgurt nicht angelegt ist.

### Stand der Technik

Bisherige Kniegassäcke sind in erster Linie für das Rückhalten des Insassen in Fahrzeuglängsrichtung ausgelegt. Hierfür sind Kniegassäcke zumeist so dimensioniert und angeordnet, dass ihre Prallflächen dann, wenn der Gassack vollständig befüllt ist, bei einem Standard-Dummy in Standard-Sitzposition sich kurz vor dem Knie-Schienbeinbererich des Dummies befindet, oder leicht an diesem anliegt. Hierdurch wird der Knie-Schienbeinbereich durch den Kniegassack selbst wenig belastet, und man benötigt ein relativ geringes Gassackvolumen. Ein Nachteil einer solchen Konfiguration ist, dass sie bei einem seitlich versetzten Frontalzusammenstoß keine befriedigende Schutzwirkung zeigt. So kann es beispielsweise vorkommen, dass die Knie des Insassen an der Prallfläche des Kniegassacks abrutschen und so in Kontakt zur Fahrzeug-Innenstruktur kommen. Weiterhin kann ein solcher Kniegassack die Vorverlagerung des Beckens und des Oberkörpers des Insassen bei einem Schrägaufprall nur unzureichend verhindern, so dass es beispielsweise schlimmstenfalls auch zu einem Kontakt des Kopfes mit der A-Säule kommen kann. Dieses Problem tritt insbesondere bei ungegurteten Insassen auf.

Die DE 2 109 637 A zeigt unter anderem einen Kniegassack, der so weit ins Wageninnere expandiert, dass er nahezu den gesamten Knie-Schienbeinbereich des Insassen außen umschlingt. Mit einem solchen Kniegassack lässt sich zwar sicherlich eine gute Rückhaltewirkung erzielen, es muss jedoch eine sehr große Belastung des Insassen durch den Gassack als solchen in Kauf genommen werden. Weiterhin ist die Befüllung eines so großvolumigen Gassacks schwierig.

Weiterhin ist aus der US 5 324 070 A ein Kraftfahrtzeug und ein kniegassack gemäß dem Oberbegriff des Anspruchs 1 bekannt.

### Gegenstand der Erfindung

Hiervon ausgehend ist es Aufgabe der Erfindung, ein Kraftfahrzeug mit wenigstens einem Kniegassack dahingehend weiterzubilden, dass mit einfachen Mitteln ein verbesserter Schutz des Insassen bei einem seitlich versetzten Frontalzusammenstoß erreicht wird.

Diese Aufgabe wird durch ein Kraftfahrzeug mit den Merkmalen des Anspruchs 1 gelöst.

In den meisten Kraftfahrzeugen wird der einem vorne sitzenden Insassen zugeordnete Fußraum, also der Fahrzeugbereich vor dem jeweiligen Vordersitz, auf der einen Seite von der Fahrzeuginnenstruktur und auf der anderen Seite von einer Mittelkonsole begrenzt. Erfindungsgemäß wird nun der Kniegassack so ausgebildet, dass seine Breite, wenn er sich ungehindert ausdehnen könnte, größer als der ihm zur Verfügung stehende Abstand zwischen Fahrzeuginnenstruktur, beispielsweise der Fahrer-/Beifahrertür, und Mittelkonsole ist. Das überschüssige Volumen des Kniegassacks weicht somit nach innen aus, so dass sich an den Seiten wulstförmige Bereiche ausbilden, was zu einem seitlichen Halt der Knie führt. Der aufgeblasene Kniegassack wird also konturiert, ohne dass eine aufwendige Formgebung der Gassackhülle notwendig wäre. Der gewünschte Konturierungseffekt kann durch den Einsatz von durch den Gassack verlaufenden Fangbändem noch verbessert werden.

Dadurch, dass sich die wulstförmigen Bereiche an der Fahrzeuginnenstruktur und der Mittelkonsole abstützen, ergibt sich eine sehr gute Formstabilität. Der Kniegassack kann nicht ausweichen, so dass sich eine hervorragende Rückhaltewirkung bei einer schräg nach vorne gehenden Krafteinwirkung durch den Knie-Schienbeinbereich des Insassen ergibt.

Durch das Einklemmen des Kniegassacks wird auch verhindert, dass ein Knie zwischen dem Gassack und einer seitlichen Strukturbegrenzung durchschlägt.

In einer bevorzugten Ausführungsform ist der Kniegassack so dimensioniert und positioniert, dass die Knie-Schienbeinbereiche des zugeordneten Insassen von der Prallfläche des Gassacks umschlungen werden. Insbesondere ist ein solches Kraftfahrzeug gemäß den Ansprüchen 4 oder 5 ausgebildet.

Die Erfindung wird nun anhand von Ausführungsbeispielen mit Bezug auf die Figuren näher erläutert. Hierbei zeigen:

### Kurzbeschreibung der Zeichnungen

- Figur 1: Eine schematische Darstellung eines vollständig im Fußraum expandierten Kniegassacks,
- Figur 2: eine schematische Darstellung einer bevorzugten Ausfüh- rungsform eines Kniegassacks einschließlich der Position der Knie eines Insassen,
- Figur 3 u. 4: Darstellungen von Kniegassäcken nach dem Stand der Tech- nik.

### Beschreibung bevorzugter Ausführungsformen

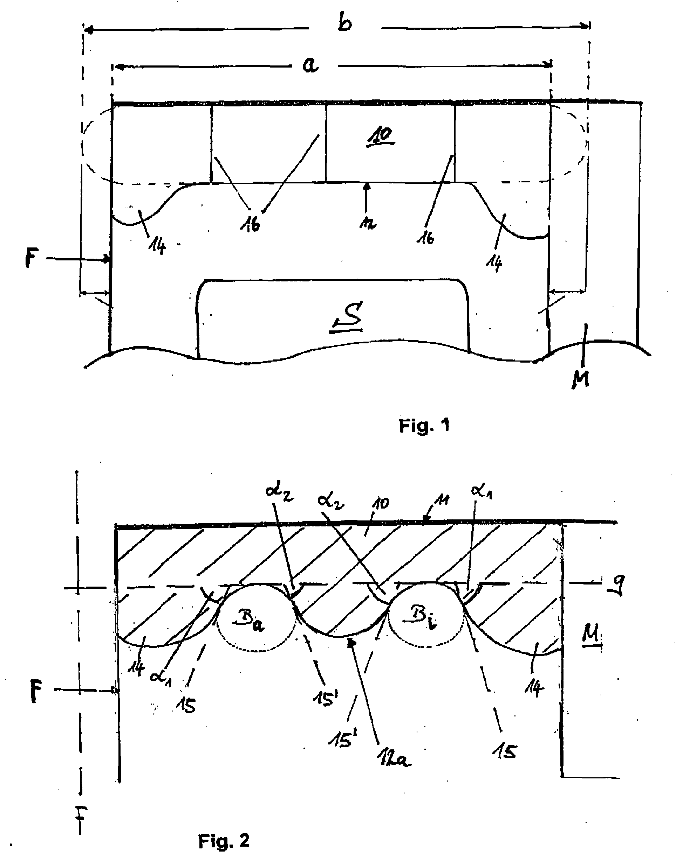

Figur 1 zeigt schematisch einen Teil eines Vordersitzes S und den sich davor befindenden Fußraum mit einem Kniegassack 10 in einem horizontalen Schnitt. Der von einem nicht dargestellten Gasgenerator aufgeblasene Kniegassack 10 ist vollständig expandiert. Wie man sieht, bildet der Kniegassack 10 an seinen Seiten wulstförmige Bereiche 14 aus. Diese wulstförmigen Bereiche 14 kommen dadurch zustande, dass die maximale Breite b, die der Kniegassack 10 hätte, wenn er sich frei entfalten könnte, größer ist als der ihm zur Verfügung stehende Abstand a zwischen Fahrzeuginnenstruktur F und Innenseite der Mittelkonsole M. Die Form, die der Kniegassack 10 bei freier Entfaltung hätte, ist gestrichelt dargestellt. Vorzugsweise ist die Breite b des Kniegassacks 30 bis 100 mm größer als der zur Verfügung stehende Abstand a.

Durch die sich ausbildenden wulstförmigen Bereiche 14 findet bei einer schrägen Insassenbewegung eine bessere seitliche Abstützung statt, was einerseits einen Kontakt der Knie mit der Mittelkonsole bzw. der Fahrzeuginnenstruktur, sowie ein seitliches Durchrutschen zwischen Kniegassack und beispielsweise der Innenverkleidung der Tür verhindert und weiterhin das Risiko eines Kopfkontaktes mit der A-Säule, insbesondere bei ungegurteten Insassen, verringert.

Um die Ausbildung der seitlichen Wülste 14 zu verbessern, erstrecken sich im Mittelbereich Fangbänder 16 von der Grundfläche 11 zur Prallfläche 12 des Kniegassacks 10. Durch diese wird die Dicke des Kniegassacks 10 im Mittelbereich begrenzt. Ohne Fangbänder 16 bilden sich nur geringe Wülste 14 aus, oder es erhöht sich die Dicke des gesamten Kniegassacks 10. Die anderen Vorteile, insbesondere eine bessere seitliche Abstützung und das Verhindern eines seitlichen Durchrutschens bleiben erhalten.

In Figur 2 ist ein bevorzugtes Ausführungsbeispiel der Erfindung dargestellt. Der Kniegassack 10, dessen Breite auch hier größer gewählt ist, als der zur Verfügung stehende Abstand zwischen Fahrzeuginnenstruktur F, die in diesem Bereich zumeist von der Türinnenverkleidung gebildet wird, und der Mittelkonsole M. Weiterhin ist der Kniegassack so dimensioniert und positioniert, dass er die Knie-Schienbeinbereiche der Beine B des sich in seiner Standarsitzposition befindenden Insassen zumindest außen teilweise umschlingt. Die Umschlingung erfolgt idealerweise sowohl in den inneren, als auch in den äußeren Knie-Schienbeinbereichen. Um bestmögliche Ergebnisse zu erzielen, sollte der Grad der Umschlingung in einem gewissen Bereich liegen. Dieser Grad der Umschlingung kann mithilfe eines 50% H III Dummies in seiner Standard-Sitzposition, wobei der Dummy in seinem sogenannten H-Punkt sitz, definiert werden:

Figuren 2 zeigt den Knie-Schienbeinbereich im Bereich der Knie des oben definierten Dummies. Zur Definition des Umschlingungsgrades wird die Gerade g herangezogen, die sich horizontal und senkrecht zur Fahrzeuglängsachse f erstreckt. Als Maß für den Grad der Umschlingung werden nun die Winkel α herangezogen, in dem die gedachten Tangentialebenen 15,15', zur Geraden g stehen. Diese Tangentialebenen haben ihrer Definition nach die Orientierung der Prallfläche 12 entlang der Linie, an der die Anlage der Prallfläche 12 am Knie-Schienbeinbereich beginnt. Die Winkel α₁ bezeichnen die Schnittwinkel derjenigen Tangentialflächen, die den äußeren Knie-Schienbeinbereich betreffen, die Winkel α₂ bezeichnen die Schnittwinkel derjenigen Tangentialflächen, die den inneren Knie-Schienbeinbereich betreffen.

Im hier dargestellten Ausführungsbeispiel ist der Knie-Gassack 10 symmetrisch ausgebildet, was bedeutet, dass die das fahrzeugäußere Bein Bₐ betreffenden Winkel α genau so groß sind wie die das fahrzeugäußere Bein Bᵢ betreffenden Winkel α. Der Winkel α₁ (Außenseite des Knie-Schienbeinbereichs) beträgt zwischen 15° und 75°, vorzugsweise zwischen 35° und 55°. Der Winkel α₂ (Innenseite) liegt im selben Bereich und ist vorzugsweise gleich groß wie der Winkel α₁. Zur Entlastung der Schienbeine sollte der Grad der Umschlingung nach unten abnehmen.

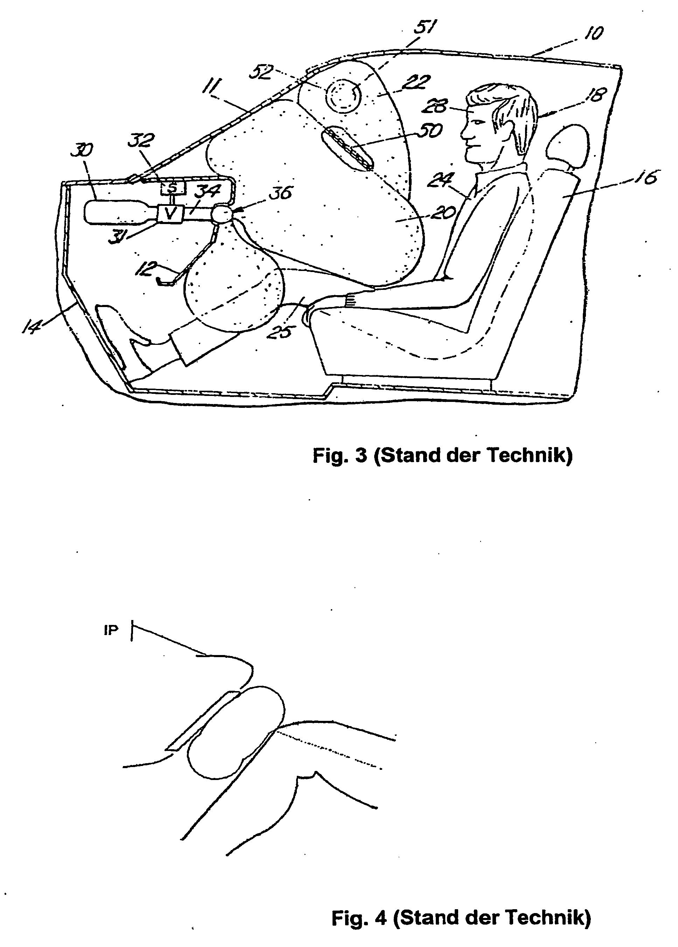

In den Figuren 4 und 5 ist zur Verdeutlichung der Neuerung der Stand der Technik dargestellt. Hierbei wurde bislang vorgeschlagen, entweder (Figur 3) den gesamten Knie-Schienbeinbereich stark zu umschlingen, oder aber (Figur 4) eine Umschlingung mehr oder minder vollständig zu vermeiden.

### Bezugszeichenliste

- 10: Knie-Gassack
- 11: Grundfläche
- 12: Prallfläche
- 14: seitlicher Wulst
- 15,15': Tangentialfläche
- 16: Fangband
- F: Fahrzeuginnenstruktur
- M: Innenseite der Mittelkonsole
- S: Vordersitz
- a: Abstand
- b: Breite
- B: Bein
- f: Fahrzeuglängsachse
- g: Gerade
- α: Winkel

## Patentansprüche

1. Kraftfahrzeug mit:
- zwei Vordersitzen, wobei sich vor jedem Vordersitz (S) ein Fußraum befindet, welcher auf einer ersten Seite durch die Fahrzeuginnenstruktur (F) und auf der der ersten Seite gegenüber liegenden Seite von einer Mittelkonsole (M) begrenzt wird,
- wenigstens einem im Fußraum angeordneten Kniegassack (10), wobei der vollständig befüllte, von äußeren Kräften freie Kniegassack horizontal und senkrecht zur Längsachse des Kraftfahrzeugs (f) eine bestimmte maximale Breite (b) aufweist,
**dadurch gekennzeichnet, dass** der Kniegassack (10) so im Fußraum angeordnet ist, dass seine maximale Breite (b) im aufgeblasenen Zustand größer als der zur Verfügung stehende Abstand (a) zwischen Fahrzeuginnenstruktur (F) und Mittelkonsole (M) ist.

2. Kraftfahrzeug nach Anspruch 1, **dadurch gekennzeichnet, dass** die maximale Breite wenigstens 30 mm größer als der zur Verfügung stehende Abstand ist.

3. Kraftfahrzeug nach einem der Ansprüche 1 oder 2, **dadurch gekennzeichnet, dass** der Kniegassack so ausgebildet und positioniert ist, dass in vollständig aufgeblasenem Zustand seine Prallfläche (12) die Knie-Schienbeinbereiche des zugeordneten Insassen zumindest außen teilweise umschlingt.

4. Kraftfahrzeug nach Anspruch 3, **dadurch gekennzeichnet, dass** der Knie-Gassack (10) so ausgebildet und positioniert ist, dass bei einem 50% H III Dummy in Standardsitzposition zumindest die den äußeren oberen Knie-Schienbeinbereichen zugeordneten Tangentialflächen (15) der Prallflächen (12) mit einer horizontal und senkrecht zur Fahrzeuglängsachse (f) verlaufenden Geraden (g) jeweils einen ersten Winkel (α₁) zwischen 15° und 75° einschließen.

5. Kraftfahrzeug nach Anspruch 3 oder Anspruch 4, **dadurch gekennzeichnet, dass** der Knie-Gassack so ausgebildet und positioniert ist, dass bei einem 50% H III Dummy in Standardsitzposition die Prallfläche auch die inneren Knie-Schienbeinbereiche umschlingt.

## Claims

1. Vehicle with:
- two front seats, whereby a footwell is located in front of each front seat (S), said footwell being limited on a first side by the vehicle inner structure (F) and on the side lying opposite the first side by a centre console (M),
- at least one knee airbag (10) located in the footwell, whereby the completely filled knee airbag being free of outside forces exhibits a certain maximum width (b) horizontally and perpendicularly to the longitudinal axis of vehicle (f),
**characterised in that** knee airbag (10) is arranged in the footwell in such a way that its maximum width (b) in inflated state is larger than the available distance (a) between the vehicle inner structure (F) and centre console (M).

2. Motor vehicle according to claim 1, **characterised in that** the maximum width is at least 30 mm larger than the available distance.

3. Motor vehicle according to one of claims 1 or 2, **characterised in that** the knee airbag is formed and positioned in such a way that in its fully inflated state its impact surface (12) entangles the knee-shin areas of the allocated vehicle occupants partially at least on the outside.

4. Motor vehicle according to Claim 3, **characterised in that** knee airbag (10) is formed and positioned in such a way that in the case of a 50% H III dummy in standard seating position, at least the tangential surfaces (15) of the impact surfaces (12) which are allocated to the outer upper knee-shin areas each include a first angle (α₁) of between 15° and 75° with a straight line running horizontally and perpendicularly to vehicle longitudinal axis (f).

5. Motor vehicle according to Claim 3 or Claim 4, **characterised in that** the knee airbag is formed and positioned in such a way that with a 50% H III dummy in standard seating position, the impact surface also entangles the inner knee-shin areas.

## Revendications

1. Véhicule automobile comprenant :
· deux sièges avant, un espace pour les pieds se situant devant chaque siège avant (S), lequel espace est limité sur un premier côté par la structure interné du véhicule (F) et sur le côté opposé au premier côté par une console centrale (M),
· au moins un airbag genoux (10) disposé dans l'espace pour les pieds, l'airbag genoux entièrement rempli, exempt de forces extérieures, comprenant, horizontalement et perpendiculairement à l'axe longitudinal du véhicule automobile (f), une largeur maximale (b) définie,
**caractérisé en ce que** l'airbag genoux (10) est disposé dans l'espace pour les pieds de sorte que sa largeur maximale (b) à l'état gonflé est supérieure à l'écart (a) à disposition entre la structure interne du véhicule (F) et la console centrale (M).

2. Véhicule automobile selon la revendication 1, **caractérisé en ce que** la largeur maximale est au moins supérieure de 30 mm à l'écart à disposition.

3. Véhicule automobile selon l'une quelconque des revendications 1 ou 2, **caractérisé en ce que** l'airbag genoux est réalisé et positionné de sorte qu'à l'état entièrement gonflé sa surface d'impact (12) entoure en partie au moins à l'extérieur les zones genou-tibia de l'occupant associé.

4. Véhicule automobile selon la revendication 3, **caractérisé en ce que** l'airbag genoux (10) est réalisé et positionné de sorte que, dans le cas d'un mannequin hybride III 50ème percentile en position assise standard, au moins les surfaces tangentielles (15) des surfaces d'impact (12) associées aux zones supérieures extérieures genou-tibia enferment avec une droite (g) s'étendant horizontalement et perpendiculairement à l'axe longitudinal du véhicule (f) respectivement un premier angle (α₁) compris entre 15° et 75°.

5. Véhicule automobile selon la revendication 3 ou la revendication 4, **caractérisé en ce que** l'airbag genoux est réalisé et positionné de sorte que dans le cas d'un mannequin hybride III 50ème percentile en position assise standard, la surface d'impact entoure également les zones intérieures genou-tibia.
